# EUROPÄISCHE PATENTANMELDUNG

(11) **EP 1 834 709 A1**
(43) Veröffentlichungstag der Anmeldung: **19.09.2007**
(21) Anmeldenummer: 06005105.9
(22) Anmeldetag: 13.03.2006
(51) Int. Cl.: B08B 9/032, F01D 25/00

(54) **Verfahren zur Reinigung von Kanälen in Werkstücken sowie Vorrichtung hierfür**

(71) Anmelder: SIEMENS AKTIENGESELLSCHAFT, 80333 München (DE)
(72) Erfinder: Jabado, Rene, 14199 Berlin (DE); Dahl Jensen, Jens, Dr., 14050 Berlin (DE); Krüger, Ursus, Dr., 14089 Berlin (DE); Körtvelyessy, Daniel, 13469 Berlin (DE); Lüthen, Volkmar, Dr., 12157 Berlin (DE); Reiche, Ralph, 13465 Berlin (DE); Rindler, Michael, 15566 Schöneiche (DE); Ullrich, Raymond, 14621 Schönwalde (DE)

(57) **Zusammenfassung**

Die Erfindung betrifft ein Verfahren zur Reinigung von Kanälen in Werkstücken, insbesondere von Kühlluftkanälen in Turbinenbauteilen wie Transition Pieces oder Turbinenschaufeln, wobei das Werkstück (1) mit den Kanälen in ein Flüssigkeitsbad eingetaucht wird und eine Flüssigkeit schlagartig unter einem Druck durch die Kanäle gepresst wird.

## Beschreibung

Die Erfindung betrifft ein Verfahren zur Reinigung von Kanälen in Werkstücken, insbesondere von Kühlluftkanälen in Turbinenbauteilen wie Transition Pieces oder Turbinenschaufeln. Sie bezieht sich des Weiteren auf eine Vorrichtung zur Durchführung dieses Verfahrens.

Für Gasturbinen bestimmte Turbinenbauteile werden insbesondere dann, wenn die Gasturbine bei hohen Temperaturen betrieben wird, z.B. luftgekühlt. Hierzu wird Kühlluft z.B. durch Hohlräume von Turbinenbauteilen eingeleitet. Die Kühlluft tritt dann an bestimmten Stellen der Heißgasoberfläche über Kühlluftkanäle aus. Beispiele für solche Turbinenbauteile sind z.B. Turbinenschaufeln und finden sich in der DE 692 10 892 T2, DE 36 42 798 A1 und DE 694 20 582 T2.

Im Betrieb/Repair werden solche Kühlkanäle durch Fremdstoffe oder Oxidation verschmutzt oder sogar verschlossen. Hierdurch wird der Austritt von Kühlluft behindert mit der Folge, dass sich die Kühlwirkung verschlechtert. Dies kann zum Ausfall des Turbinenbauteils führen.

Um dies zu vermeiden, werden bei der Reparatur von Turbinenbauteilen die Kühlkanäle gereinigt bzw. eventuelle Verschlüsse entfernt. Dies geschieht im Stand der Technik mit mechanischen Hilfsmitteln oder mittels Laser. Dies ist wegen der Härte der Verunreinigungen, deren Beschaffenheit und auch durch die Winkellage der Bohrungen häufig schwierig. Laserverfahren sind wegen der Positionierung des Lasers aufwendig und versagen, wenn die Verunreinigung transparent ist, wie dies beispielsweise bei Strahlresten von Glaskugeln der Fall ist.

Der Erfindung liegt die Aufgabe zugrunde, ein Verfahren bereitzustellen, mit dem sich auf einfache Weise eine Reinigung von Kanälen an Werkstücken, insbesondere von Kühlluftkanälen an Transition Pieces, wirksam durchführen lässt. Ein zweiter Teil der Aufgabe besteht darin, eine hierfür geeignete Vorrichtung zu konzipieren.

Der erste Teil der Aufgabe wird erfindungsgemäß dadurch gelöst, dass das Werkstück mit den Kanälen in ein Flüssigkeitsbad eingetaucht wird und eine Flüssigkeit schlagartig unter einem Druck durch die Kanäle gepresst wird. Grundgedanke der Erfindung ist es also, ein inkompressibles Medium in Form einer Flüssigkeit auf die Kühlkanäle schlagartig, d.h. in kurzer Zeit und mit hoher Kraft einwirken zu lassen und hierdurch Verschmutzungen zu lösen. Auf diese Weise werden eventuell verschlossene Kanäle geöffnet und erhalten eventuell verschmutzte Kanäle wieder ihre ursprüngliche Geometrie.

Vorteilhafterweise wird eine Vorrichtung in das Flüssigkeitsbad eingesetzt, die ein Gehäuse mit einem Hohlraum aufweist, der auf einer Seite eine Austrittsöffnung hat, wobei der Hohlraum des Gehäuses mit Flüssigkeit gefüllt und das Gehäuse mit der Austrittsöffnung dort auf das Werkstück aufgesetzt wird, wo sich wenigstens ein Kühlkanal befindet, und wobei Flüssigkeit schlagartig aus dem Hohlraum verdrängt und über die Austrittsöffnung in den Kanal bzw. die Kanäle gepresst wird. Dabei muss die Vorrichtung nicht auf die Kühlkanäle ausgerichtet sein. Aufgrund der Inkompressibilität der Flüssigkeit ist deren Druckkraft richtungsunabhängig, so dass ihre Wirkung auch dann eintritt, wenn der Ausstoß aus der Austrittsöffnung nicht in Richtung des zu reinigenden Kanals erfolgt. Die Reinigung erfolgt so schnell und effektiv.

In Ausbildung der Erfindung ist vorgesehen, dass das Werkstück so weit in das Flüssigkeitsbad eingetaucht wird, dass sich der Hohlraum im auf das Werkstück aufgesetzten Zustand der Vorrichtung vollständig unterhalb des Flüssigkeitsspiegels befindet. Auf diese Weise ist gesichert, dass der Hohlraum vollständig mit der Flüssigkeit gefüllt ist.

Nach der Erfindung ist ferner vorgeschlagen, dass die Flüssigkeit in dem Hohlraum in Richtung auf die Austrittsöffnung verdrängt wird. Die Verdrängung kann mit Hilfe eines in dem Hohlraum beweglichen Verdrängungskörpers erfolgen, der von außen betätigt wird und beispielsweise mit Hilfe eines Hammers in den Hohlraum eingetrieben werden kann. Alternativ kann der Verdrängungskörper maschinell oder motorisch betätigt werden. Dies ist insbesondere günstig, wenn eine Vielzahl von Kanälen gereinigt werden soll. Es ist auch möglich, die Flüssigkeit in einer externen Vorrichtung schlagartig manuell oder maschinell unter Druck zu setzen. In diesem Fall wird die Flüssigkeit über eine Zuleitung in die Kanäle gepresst.

Insbesondere wenn eine Vielzahl von Kühlluftkanälen gereinigt werden soll, ist es vorteilhaft, eine separate Aufsatzvorrichtung zu verwenden, die auf die Turbinenschaufel im Bereich der Kanäle aufgesetzt wird und der dann über eine Zuleitung die in einer externen Vorrichtung unter Druck gesetzte Flüssigkeit zugeführt wird. Auf diese Weise können in einem Arbeitsdurchgang eine Vielzahl von Kanälen gereinigt werden.

Als Flüssigkeit eignet sich besonders Wasser, da es nicht brennbar und gesundheitlich unbedenklich ist. Es ist aber auch möglich, eine Salzschmelze oder eine flüssige Phase eines chemischen Elements zu verwenden.

Der zweite Teil der Aufgabe wird erfindungsgemäß durch eine Vorrichtung gelöst, die ein Gehäuse mit einem Hohlraum aufweist, der an einer Seite eine Austrittsöffnung hat, wobei in den Hohlraum ein Verdrängungskörper beweglich geführt ist, der ein Betätigungselement aufweist, das aus dem Gehäuse herausragt, so dass der Verdrängungskörper von außen her zwecks Auspressen von Flüssigkeit aus der Austrittsöffnung beaufschlagt werden kann. Eine solche Vorrichtung zeichnet sich durch einfache konstruktive Gestaltung und damit Kostengünstigkeit sowie durch einfache Handhabung aus.

In Ausbildung der erfindungsgemäßen Vorrichtung ist vorgeschlagen, dass der Hohlraum als Hohlzylinder mit einer Zylinderwandung ausgebildet ist und dass der Verdrängungskörper als durch die Zylinderwandung geführter Verdrängungskolben ausgestaltet ist. Auf diese Weise wird eine besonders gute Verdrängungswirkung erzielt. Das Betätigungselement kann dabei als eine sich an den Verdrängungskolben auf der der Austrittsöffnung abgewandten Seite anschließende Kolbenstange ausgebildet sein, die zweckmäßigerweise in dem Gehäuse geführt ist.

Nach der Erfindung ist ferner vorgeschlagen, dass das Gehäuse auf der der Austrittsöffnung abgewandten Seite des Körpers wenigstens eine Durchgangsöffnung aufweist, damit bei der Betätigung des Verdrängungskörpers Luft bzw. Flüssigkeit in den Raum hinter dem Verdrängungskolben nachströmen kann, so dass es dort nicht zu einer Vakuumbildung kommt.

Nach der Erfindung ist ferner vorgeschlagen, dass das Gehäuse einen Adapter aufweist, in der sich die Austrittsöffnung befindet. Der Adapter kann an seiner Außenfläche an die Oberflächenform des jeweils zu reinigenden Werkstücks so angepasst werden, dass er auf dem Werkstück eine die Austrittsöffnung umgebende Anlage hat. Auf diese Weise wird ein Entweichen der aus der Austrittsöffnung gepressten Flüssigkeit weitgehend vermieden mit der Folge, dass die von dem Verdrängungskörper ausgehende Kraft möglichst vollständig in Druckkraft innerhalb der Flüssigkeit umgesetzt wird. Der Adapter kann beispielsweise mit dem Gehäuse verschraubt sein, so dass er leicht gegen andere Adapter ausgetauscht werden kann.

Zusätzlich ist es zweckmäßig, wenn die Austrittsöffnung von einer Dichtung umgeben ist, die im Falle der Anordnung eines Adapters in diesem angeordnet ist. Die Dichtung kann beispielsweise ein Rundschnurring (O-Ring) sein, der bei Aufsetzen der Vorrichtung auf das Werkstück für eine möglichst gute Abdichtung sorgt.

Nach der Erfindung ist schließlich vorgesehen, dass die Vorrichtung eine Rückstellfeder aufweist, die den Verdrängungskörper in einer Ausgangsstellung hält, so dass die Krafteinwirkung auf den Verdrängungskörper gegen den Widerstand der Rückstellfeder erfolgt. Zweckmäßigerweise ist die Feder in dem Hohlraum angeordnet, wo sie geschützt liegt.

In der Zeichnung ist die Erfindung anhand eines Ausführungsbeispiels näher veranschaulicht.

Es zeigen:

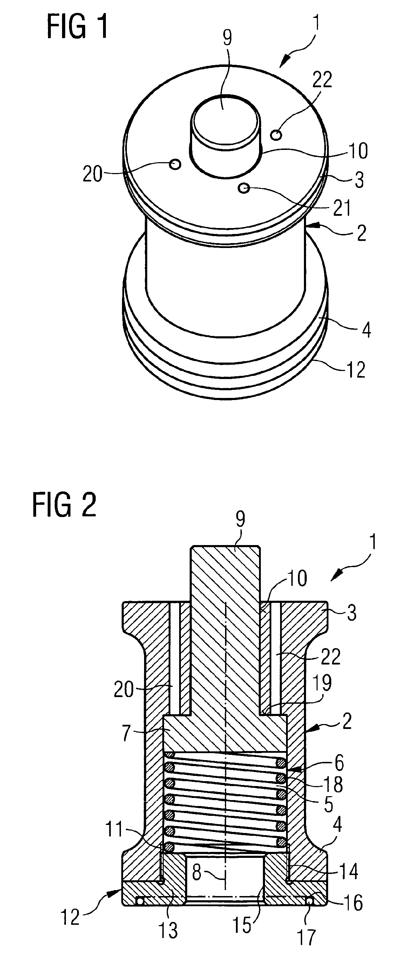

- Figur 1: eine perspektivische Ansicht der erfindungsgemäßen Vorrichtung schräg von oben,
- Figur 2: einen Querschnitt durch die Vorrichtung gemäß Figur 1,
- Figur 3: eine Gasturbine,
- Figur 4: eine perspektivische Ansicht einer Turbinenschaufel und
- Figur 5: eine perspektivische Ansicht einer Brennkammer.

Die in den Figuren dargestellte Vorrichtung 1 weist ein im wesentlichen zylindrisches Gehäuse 2 auf, das oben- und untenseitig von je einem Ringsteg 3, 4 begrenzt wird. In dem Gehäuse 2 befindet sich ein zylindrischer Hohlraum 5, der von einer Zylinderwandung 6 umgrenzt wird. In dem Hohlraum 5 ist ein Verdrängungskolben 7 axial in Richtung der Mittelachse 8 des Gehäuses 2 verschieblich geführt, wobei er mit seinem Umfang an der Zylinderwandung 6 anliegt. Der Verdrängungskolben 7 setzt sich nach oben hin in einer Kolbenstange 9 fort, die nach außen vorsteht und dort stumpf endet. Die Kolbenstange 9 wird in einer zylindrischen Bohrung 10 im Gehäuse 2 geführt.

Im unteren Bereich weist die Zylinderwandung 6 des Hohlraums 5 ein Innengewinde 11 auf, in das eine Adapterscheibe 12 eingeschraubt ist. Hierzu weist die Adapterscheibe 12 einen in den Hohlraum 5 hineinragenden Kragen 13 auf, der mit einem Außengewinde 14 versehen ist. Die Adapterscheibe 12 weist eine zylindrische Austrittsöffnung 15 auf, über die der Hohlraum 5 Verbindung zum Außenraum hat.

Die Adapterscheibe 12 ist an ihrer Unterseite eben ausgebildet und hat dort eine Ringnut 16, in die ein nach außen etwas vorstehender elastomerer Dichtungsring 17 eingelegt ist.

Zwischen der Unterseite des Verdrängungskolbens 7 und dem Kragen 13 der Adapterscheibe 12 ist eine als Druckfeder ausgebildete Schraubenfeder 18 eingespannt. Sie sorgt dafür, dass der Verdrängungskolben 7 gegen einen Absatz 19 des Gehäuses 2 gedrückt wird und so seine Ausgangsstellung einnimmt. In den Absatz 17 münden Belüftungskanäle 20, 21, 22 die nach außen hin offen sind. Sie sorgen dafür, dass es bei einer Bewegung des Verdrängungskolbens 7 in Richtung auf die Austrittsöffnung 15 nicht zu einer Vakuumbildung an der Rückseite des Verdrängungskolbens 7 und damit zu einer Behinderung dieser Bewegung kommt.

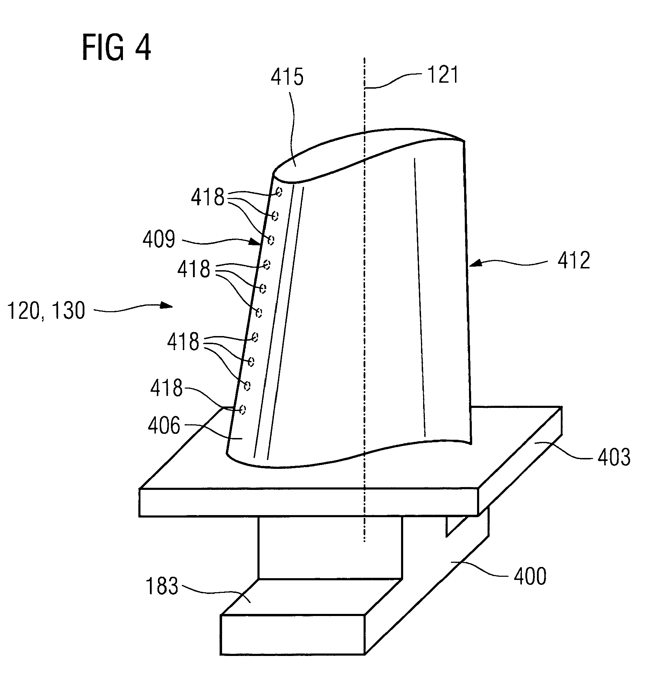

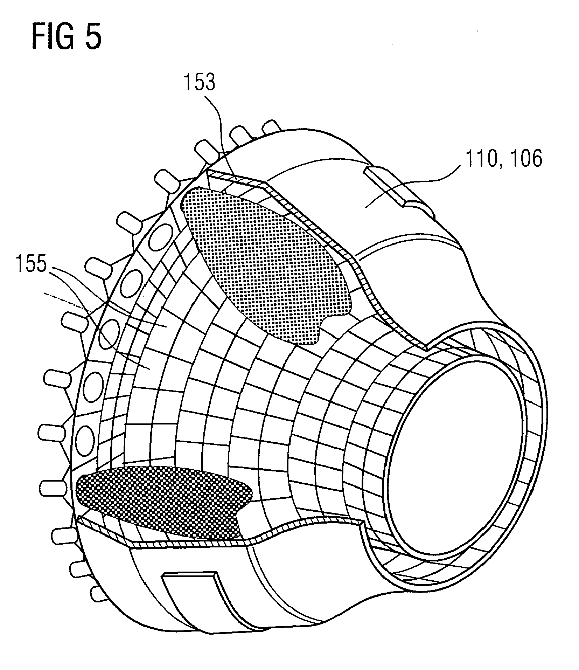

Zur Reinigung und Öffnung von Kanälen 418 (Fig. 4) in einem Werkstück 120, 130 (Fig. 4), 155 (Fig. 5) wird zunächst das Werkstück in ein Wasserbad vollständig eingetaucht, so dass sich die Kanäle und eventuelle Hohlräume innerhalb des Werkstückes mit dem Wasser füllen. Im Anschluss daran wird die Vorrichtung 1 auf das Bauteil mit der freien Seite der Adapterscheibe 12 aufgesetzt, und zwar an einer Stelle, wo sich die Öffnungen von Kanälen, insbesondere von Kühlluftkanälen, befinden. Dabei werden Werkstücke und Vorrichtung 1 so weit in das Wasserbad eingetaucht, dass sich auch der Hohlraum 5 vollständig mit Wasser füllt. Der Dichtungsring 17 sorgt nach dem Aufsetzen der Vorrichtung 1 auf das Werkstück dafür, dass die Austrittsöffnung 15 gegenüber dem Werkstück abgedichtet ist.

Die Vorrichtung 1 wird dann mit der Hand in der gewünschten Position festgehalten. Dann wird mit beispielsweise einem Gummihammer auf das obere Ende der Kolbenstange 9 geschlagen. Hierdurch wird die Kolbenstange 9 in das Gehäuse 2 eingetrieben mit der Folge, dass der Verdrängungskolben 7 in dem Hohlraum 5 befindliches Wasser aus der Austrittsöffnung 15 herauspresst. Der dabei kurzzeitig entstehende hohe Druck sorgt für ein Öffnen verstopfter Kanäle und für die Entfernung von Verunreinigungen in den Kanälen. Nach der Schlageinwirkung wird der Verdrängungskolben 7 durch Einwirkung der Schraubenfeder 18 wieder in seine gezeigte Ausgangsstellung zurückbewegt, so dass die Vorrichtung 1 für eine Wiederholung oder für einen neuen Reinigungsvorgang an anderer Stelle bereit ist.

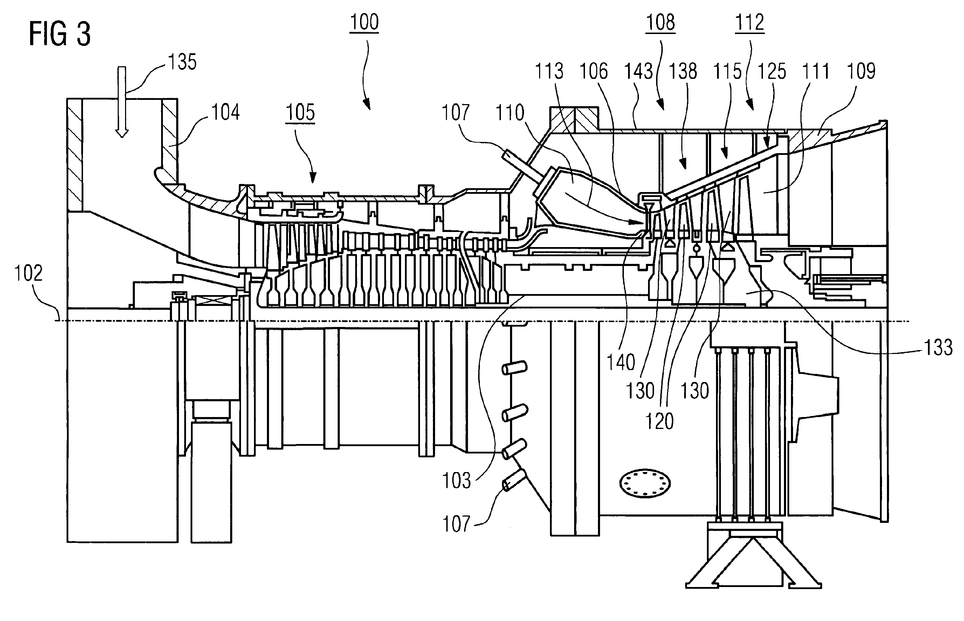

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus Zr0₂, Y₂0₃-Zr0₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAIX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

### Bezugszeichenliste

- (1): Vorrichtung
- (2): Gehäuse
- (3): Ringsteg
- (4): Ringsteg
- (5): Hohlraum
- (6): Zylinderwandung
- (7): Verdrängungskolben
- (8): Mittelachse
- (9): Kolbenstange
- (10): Bohrung
- (11): Innengewinde
- (12): Adapterscheibe
- (13): Kragen
- (14): Außengewinde
- (15): Austrittsöffnung
- (16): Ringnut
- (17): Dichtungsring
- (18): Schraubenfeder
- (19): Absatz
- (20): Belüftungskanal
- (21): Belüftungskanal
- (22): Belüftungskanal

## Patentansprüche

1. Verfahren zur Reinigung von Kanälen in Werkstücken, insbesondere von Kühlluftkanälen in Turbinenbauteilen wie Transition Pieces oder Turbinenschaufeln,
**dadurch gekennzeichnet, dass**
das Werkstück mit den Kanälen in ein Flüssigkeitsbad eingetaucht wird und eine Flüssigkeit schlagartig unter einem Druck durch die Kanäle gepresst wird.

2. Verfahren nach Anspruch 1,
**dadurch gekennzeichnet, dass**
eine Vorrichtung (1) in das Flüssigkeitsbad eingesetzt wird,
die ein Gehäuse (2) mit einem Hohlraum (5) aufweist,
der auf einer Seite eine Austrittsöffnung (15) hat,
wobei der Hohlraum (5) mit der Flüssigkeit gefüllt und das Gehäuse (2) mit der Austrittsöffnung (15) dort auf das Werkstück aufgesetzt wird,
wo sich wenigstens ein Kanal befindet und
wobei Flüssigkeit schlagartig aus dem Hohlraum (5) verdrängt wird und über die Austrittsöffnung (15) in den Kanal bzw. die Kanäle gepresst wird.

3. Verfahren nach Anspruch 2,
**dadurch gekennzeichnet, dass**
das Werkstück so weit in das Flüssigkeitsbad eingetaucht wird, dass sich der Hohlraum (5) im auf das Werkstück (5) aufgesetzten Zustand der Vorrichtung (1) vollständig unterhalb des Flüssigkeitsspiegels befindet.

4. Verfahren nach Anspruch 2 oder 3,
**dadurch gekennzeichnet, dass**
die Flüssigkeit in dem Hohlraum (5) in Richtung auf die Austrittsöffnung (15) verdrängt wird.

5. Verfahren nach Anspruch 4,
**dadurch gekennzeichnet, dass**
die Verdrängung mit Hilfe eines in dem Hohlraum (5) beweglichen Verdrängungskörpers (7) erfolgt, der von außen betätigt wird.

6. Verfahren nach Anspruch 5,
**dadurch gekennzeichnet, dass**
der Verdrängungskörper (7) maschinell oder motorisch betätigt wird.

7. Verfahren nach Anspruch 1,
**dadurch gekennzeichnet, dass**
die Flüssigkeit in einer externen Vorrichtung schlagartig unter Druck gesetzt wird.

8. Verfahren nach Anspruch 7,
**dadurch gekennzeichnet, dass**
der Druck in der externen Vorrichtung maschinell erzeugt wird.

9. Verfahren nach einem der Ansprüche 1 bis 8,
**dadurch gekennzeichnet, dass**
als Flüssigkeit Wasser verwendet wird.

10. Verfahren nach einem der Ansprüche 1 bis 8,
**dadurch gekennzeichnet, dass**
als Flüssigkeit eine Salzschmelze verwendet wird.

11. Verfahren nach einem der Ansprüche 1 bis 8,
**dadurch gekennzeichnet, dass**
als Flüssigkeit eine flüssige Phase eines chemischen Elements verwendet wird.

12. Vorrichtung (1) zur Reinigung von Kanälen in Werkstücken,
**dadurch gekennzeichnet, dass**
die Vorrichtung (1) ein Gehäuse (2) mit einem Hohlraum (5) aufweist,
der an einer Seite eine Austrittsöffnung (15) hat, und dass in dem Hohlraum (5) ein Verdrängungskörper (7) beweglich geführt ist, der ein Betätigungselement (9) aufweist, das aus dem Gehäuse (2) herausragt.

13. Vorrichtung nach Anspruch 12,
**dadurch gekennzeichnet, dass**
der Hohlraum als Hohlzylinder (5) mit einer Zylinderwandung (6) ausgebildet und
der Verdrängungskörper als durch die Zylinderwandung (6) geführter Verdrängungskolben (7) ausgestaltet ist.

14. Vorrichtung nach Anspruch 13,
**dadurch gekennzeichnet, dass**
das Betätigungselement als eine sich an den Verdrängungskolben (7) auf der der Austrittsöffnung (15) abgewandten Seite anschließende Kolbenstange (9) ausgebildet ist.

15. Vorrichtung nach Anspruch 14,
**dadurch gekennzeichnet, dass**
die Kolbenstange (9) in dem Gehäuse (2) geführt ist.

16. Vorrichtung nach einem der Ansprüche 12 bis 15,
**dadurch gekennzeichnet, dass**
das Gehäuse (2) auf der der Austrittsöffnung (15) abgewandten Seite des Verdrängungskörpers (7) wenigstens eine Durchgangsöffnung (20, 21, 22) aufweist.

17. Vorrichtung nach einem der Ansprüche 12 bis 16,
**dadurch gekennzeichnet, dass**
das Gehäuse (2) einen Adapter (12) aufweist,
in der sich die Austrittsöffnung (15) befindet.

18. Vorrichtung nach Anspruch 17,
**dadurch gekennzeichnet, dass**
der Adapter (12) auswechselbar an dem Gehäuse (2) befestigbar ist.

19. Vorrichtung nach Anspruch 18,
**dadurch gekennzeichnet, dass**
der Adapter (12) mit dem Gehäuse (2) verschraubt ist.

20. Vorrichtung nach einem der Ansprüche 12 bis 19,
**dadurch gekennzeichnet, dass**
die Austrittsöffnung (15) von einer Dichtung (17) umgeben ist.

21. Vorrichtung nach einem der Ansprüche 17 bis 20,
**dadurch gekennzeichnet, dass**
die Dichtung (17) in dem Adapter (12) angeordnet ist.

22. Vorrichtung nach einem der Ansprüche 12 bis 21,
**dadurch gekennzeichnet, dass**
die Vorrichtung (1) eine Rückstellfeder (18) aufweist, die den Verdrängungskörper (7) in einer Ausgangsstellung hält.

23. Vorrichtung nach Anspruch 22,
**dadurch gekennzeichnet, dass**
die Rückstellfeder (18) in dem Hohlraum (5) angeordnet ist.
